# EUROPÄISCHE PATENTANMELDUNG

(11) **EP 1 352 686 A1**
(43) Veröffentlichungstag der Anmeldung: **15.10.2003**
(21) Anmeldenummer: 03090104.5
(22) Anmeldetag: 10.04.2003
(51) Int. Cl.: B01J 19/00

(54) **Modulare Prozessanlage der Mikroreaktionstechnik mit Verbindungsmodule**

(30) Priorität: 10.04.2002 DE 10216714
(71) Anmelder: Institut für Angewandte Chemie Berlin-Adlershof E.V., 12489 Berlin (DE)
(72) Erfinder: Müller, Andreas, 67592 Flörsheim-Dalsheim (DE); Cominos, Vania, 55271 Stadecken-Elsheim (DE); Hessel, Volker, 65510 Hünstetten-Wallbach (DE); Horn, Benjamin, 55122 Mainz (DE)
(74) Vertreter: Walter, Wolf-Jürgen

(57) **Zusammenfassung**

Die Erfindung betrifft die Mikroreaktionstechnik, insbesondere den Anschluß von Mikroreaktoren an modulare Blöcke. Die erfindungsgemäße modulare Prozeßanlage besteht aus wenigstens einer Reihe hintereinander angeordneter modularer Verbindungspunkte, die in ihrem Inneren durchlaßfähig sind für fluidische, elektrische, sensorische und/oder digitale Materialströme und die jeweils in jeder Raumrichtung ein gleiches Rastermaß aufweisen und ein Bussystem bilden, und
aus Reaktormodulen, die von der Reihe modularer Verbindungspunkte, die Knoten oder Linienelemente darstellen, an einem Knoten in eine horizontale und/oder vertikale Raumrichtung abzweigen, und mit Materialzuführungen von den Knoten zu den Reaktormodulen und gegebenenfalls Materialabführungen von den Reaktormodulen nur in Richtung der Knoten. Die Knoten sind segmentiert und haben an wenigstens zwei Außenseiten standardisierte Anschlußseiten.

## Beschreibung

Die Erfindung betrifft das Gebiet des Anlagenbaus in der Mikroreaktionstechnik, insbesondere den Anschluß von Mikroreaktoren an modulare Blöcke.

Es sind Reaktorsysteme für die Mikroreaktionstechnik bekannt, bei denen bestimmte Reaktorelemente, wie Reaktoren, Pumpen, Wärmeaustauscher, Ventile usw. auf einer mit verbindenden Rohrleitungen ausgestatteten Basiseinrichtung angeordnet sind (US-A-5580523). Weiterhin sind modulare Blocksysteme aus der US-A-5860676 bekannt, die aus einzelnen Blöcken bestehen, die über Verbindungsklammern aneinandergereiht sind und verschiedene Meß- und Regelungseinrichtungen auf ihrer Oberseite tragen können.

Das in der DE-A-100 15 423 beschriebene modulare Prozeßsystem stellt eine parallele Anordnung von Reaktorelementen mit übergeordneter Steuerung dar, läßt jedoch keine Verknüpfung der einzelnen Elemente in allen drei Raumrichtungen zu.

Diese und andere von verschiedenen Herstellern auf den Markt gebrachten Systeme sind weiterhin in sich zwar kompatibel, können jedoch im Regelfall nicht mit anderen Mikroreaktoren kombiniert werden, da sie stets auf Reaktoren des eigenen Systems zurückgreifen. Darüber hinaus ist bei einigen Anlagen eine mechanische Stützstruktur z.B. aus profilierten Stangen erforderlich, um eine ausreichende mechanische Stabilität für Rohrleitungsverbindungen zu gewährleisten.

Der Erfindung liegt die Aufgabe zugrunde, eine Prozeßanlage der Mikroreaktionstechnik bereitszustellen, deren Einzelelemente als Bausteine im dreidimensionalen Raum beliebig vernetzbar sind und die mit marktüblichen Reaktorelementen ein in sich stabiles und mit standardisierten und reaktorspezifischen Anschlußstellen eingerichtetes modulares System der Mikroreaktionstechnik darstellt.

Erfindungsgemäß bereitgestellt wird dafür eine modulare Prozeßanlage der Mikroreaktionstechnik mit Verbindungspunkten, die gekennzeichnet ist durch
a) wenigstens eine Reihe hintereinander angeordneter modularer Verbindungspunkte, die in ihrem Inneren durchlaßfähig sind für fluidische, elektrische, sensorische und/oder digitale Materialströme und die jeweils in jeder Raumrichtung ein gleiches Rastermaß aufweisen und ein Bussystem bilden, und
b) Reaktormodule, die von der Reihe modularer Verbindungspunkte, die Knoten oder Linienelemente darstellen, an einem Knoten in eine horizontale und/oder vertikale Raumrichtung abzweigen, und mit Materialzuführungen von den Knoten zu den Reaktormodulen und gegebenenfalls Materialabführungen von den Reaktormodulen nur in Richtung der Knoten, und
c) wobei die Knoten segmentiert sind und an wenigstens zwei Außenseiten standardisierte Anschlußseiten aufweisen.

Besonders bevorzugt sind die Verbindungspunkte würfelförmig.

Jeder Knoten besteht aus wenigstens drei aneinandergereihten, mit Durchlässen versehenen Segmenten, wobei die Segmente nach außen standardisierte oder reaktorspezifische Anschlußseiten und untereinander standardisierte Anschlußseiten haben,
und das mittlere Segment wenigstens eines der Knoten quer zu einer Hauptströmungsrichtung der Materialströme wenigstens eine weitere standardisierte Anschlußseite hat, deren öffnungen über Verteilungseinrichtungen im Inneren des dritten Segments mit den Materialströmen der Hauptströmungsrichtung verbunden sind.

An diese weitere standardisierte Anschlußseite ist in einer Ausführungsform der Erfindung ein weiteres Segment (X) mit einer standardisierten Anschlußseite und einer reaktorspezifischen Anschlußseite angeschlossen. An diesen Knoten über dessen mittleres Segment und das weitere Segment (X) ist dann ein beliebiges Reaktormodul an der reaktorspezifischen Ausßenseite angeschlossen.

Eine weitere Ausführungsform der Erfindung enthält einen Knoten aus wenigstens drei aneinandergereihten, mit Durchlässen versehenen Segmenten, von denen die beiden äußeren Segmente auf ihrer nach außen weisenden Seite jeweils eine reaktorspezifische Seite bilden und auf ihrer nach innen weisenden Seite jeweils eine standardisierte Seite bilden, wobei sich die standardisierte innere Seite der beiden äußeren Segment an eine standardisierte Seite eines dazwischenliegenden dritten Segments anschließen, und wobei das mittlere Segment an seinen quer zur Hauptströmungsrichtung befindlichen Außenflächen zwei weitere standardisierte Außenseiten aufweist.

Unter "reaktorspezische Seite" eines Segments werden solche Seiten verstanden, bei denen Durchlaßöffnungen in gleicher oder anderer lokaler Anordnung wie bei der Anschlußstelle des Reaktors vorhanden sind und bei denen gegebenenfalls Gegenstücke für formschlüssige Verbindungen zwischen Reaktoranschlußstelle und Knoten angeordnet sind. Die reaktorspezifische Seite kann daher jeweils sehr unterschiedlich gestaltet sein, angepaßt an Bauart und Typ eines beliebigen auf dem Markt befindlichen oder konzipierten Mikroreaktors oder Reaktorelements (Ventil, Pumpe, Wärmeaustauscher usw.). Gegenstücke können auch durch planare Flächen gebildet werden.
Ein solches Segment kann in einer speziellen Ausführungsform auch bereits Reaktorelemente (Ventil, Sensoren, elektronische Leistungsverstärker usw.) oder ganze Reaktoren enthalten.

Unter dem Begriff "standardisierte Seite" eines Segments werden solche Seiten verstanden, die Durchlaßöffnungen in gleicher lokaler Anordnung wie bei einer ebenfalls standardisierten Anschlußstelle des nächsten Segments haben und bei denen gegebenenfalls Gegenstücke für formschlüssige Verbindungen zwischen einer standardisierten Segmentanschlußstelle und einer weiteren standardisierten Segmentanschlußstelle vorhanden sind.

Eine "Durchlaßöffnung" oder ein "Durchlaß" ist ein das Segment von einer Eintrittsöffnung bis zu einer Austrittsöffnung durchlaufender gesonderter Abschnitt, der eine öffnung im eigentlichen Sinne wie ein Rohr sein kann oder ein Sammelraum oder ein elektrischer Durchlaß, ein optischer Durchlaß z.B. Lichtleiter, oder ein Kontaktabschnitt für wärmeleitfähige Materialien. Dabei müssen Ein- und Austrittspunkt der Öffnung oder des Durchlasses nicht unbedingt auf den gegenüberliegenden Seiten des Segments sein, sondern können auch auf anderen Seiten des Segments liegen. Ein Kontaktabschnitt für Wärmeleitung oder ein Durchlaß für optische Signale kann im Extremfall das gesamte Segment sein.

Beispielsweise kann beim Austausch von Wärme zwischen wenigstens zwei Mikroreaktoren mit unterschiedlichen Anschlußstellen ein erfindungsgemäßer Knoten mit wenigstens drei Segmenten zwischen den beiden Reaktoren angeordnet werden, wobei das mittlere Segment des Knotens insgesamt aus einem wärmeleitfähigen Material besteht und damit die über seine eine standardisierte Seite von dem ersten Segment aufgenommene Wärme mit seiner anderen standardisierten Seite direkt an das dritte Segment weiterleitet und von diesem über dessen reaktorspezifische Seite an einen anderen z.B. endothermen Reaktor abgibt. Das gleiche kann auch zwischen einem Reaktor, der als Wärmeaustauscher betrieben wird und einem zweiten Reaktor erfolgen.

Alle Segmente können einen oder mehrere Durchlässe für fluidische, elektrische, optische oder thermische Ströme aufweisen. Es können auch Durchlässe unterschiedlicher Art in einem Segment vorhanden sein, wie z.B. Kanäle, Rohre, Sammelräume, Kabel, Lichtleitfaser. Materialbrücken usw.

Der Begriff "in gleicher lokaler Anordnung" bedeutet Weiterführung eines rohrförmigen, elektrischen, thermischen oder optischen Durchlasses an genau der gleichen Position mit gleichem Durchmesser oder mit größerem Durchmesser oder in zwei oder mehrere Ströme aufgeteilt, oder Weiterführung von zwei oder mehreren Strömen zu einem Strom vereinigt.

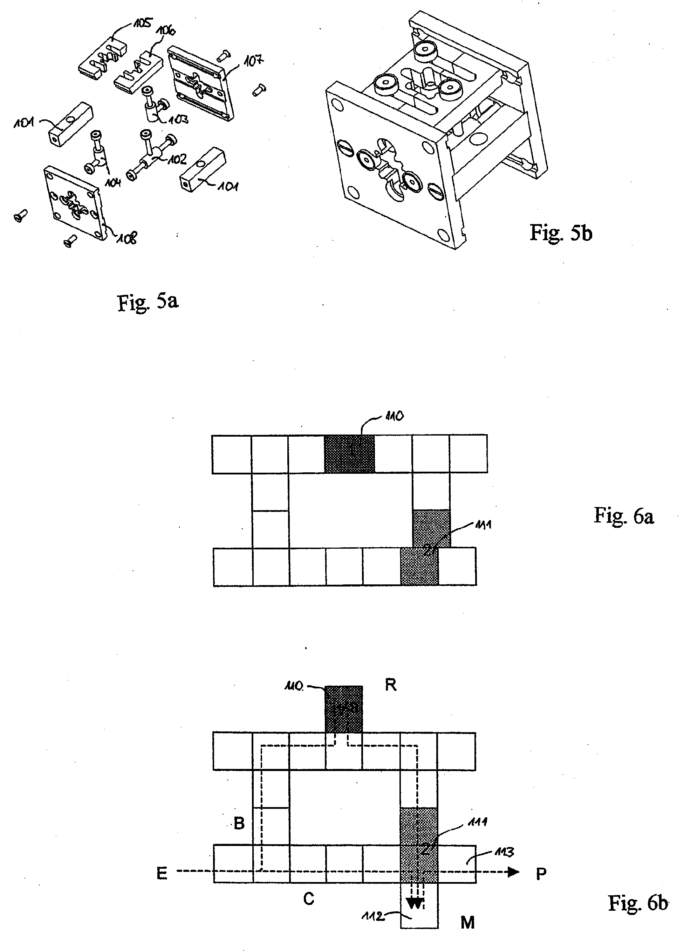

Die erfindungsgemäße Prozeßanlage stellt eine konsequent standardisierte dreidimensionale Verknüpfung von Apparaten dar, in denen eine Verarbeitung von Stoffen stattfindet. Dabei erfolgt eine räumliche (gedachte) Festlegung (=Rasterung) nur auf bestimmte erlaubte Stellen. Diese Stellen sind mit den Verbindungspunkten durch ihre kubische Form in jedem Fall und aus jeder Raumrichtung her ansteuerbar unabhängig von dem gewünschten Anlagendurchsatz. Da der Anlagendurchsatz beispielsweise die Größe eines Reaktors bestimmt, gegebenenfalls durch die erforderliche Verweilzeit für eine bestimmte Reaktion, können Reaktoren mit verschiedener Größe nicht die Vorgabe nach einer konstanten Außenabmessung erfüllen. Sie sind daher als standardisierte Elemente nicht verwendbar, wie in Fig. 6a deutlich gezeigt wird. Bei diesem seriellen Schienensystem, das kein Bussystem darstellt, ergeben sich Schnittstellen mit Verschiebung infolge des nichtstandardisierten Reaktors.

Durch Einführung eines Bussystems, bei dem die Einzelelemente (die Verbindungspunkte) das gleich Raster aufweisen, können alle Reaktorelemente sackartig (wie in Fig. 6b und 7 gezeigt) und damit unabhängig von ihrer Größe an die entsprechenden Knoten angeschlossen werden, wobei die eingeführten Stoffe oder Signale (Fluidbus, Signalbus) entweder verarbeitet (verbraucht) oder in den Knoten bearbeitet zurückgeführt werden. Das heißt, in diesem System werden die fluidischen, elektrischen, sensorischen und digitalen Flüsse nur geführt; die Flüsse werden im Bus nicht behandelt oder weiterverarbeitet Bussystem). Die Weiterverarbeitung erfolgt in Reaktormodulen, die an das Bussystem ankoppeln. Eine solche Ankopplung erfolgt über eine standardisierte Anschlußfläche. Alle sonstigen Reaktormodulflächen sind nicht standardisiert.

Ein Merkmal der Anlageist daher die einseitige Zu- und Abfuhr der Ströme zu den Reaktormodulen. Eine Durchleitung von Strömen durch die Reaktoren ist nicht zweckdienlich, da zum einen dem Bussystem ansonsten Informationen über diese Ströme (sensorische Daten, etc.) verloren gehen, aber auch, weil aufgrund unterschiedlicher Reaktorabmessungen ansonsten die Rasterung nicht mehr eingehalten werden kann.

In Ausnahmefällen können Reaktorelemente, wie z.B. ein Reaktor, eine aus dem Bussystem ausleitende Entgasungsöffnung haben.

Durch die Anlagenstruktur ist es möglich, beispielsweise Durchsätze dadurch zu erhöhen, daß man
a) bis zu einem bestimmten Punkt größere Reaktoren ankoppelt oder
b) eine weitere Anlage parallel schaltet.
Das bedeutet, daß die zugeführten Ströme zunächst entsprechend aufgeteilt werden müssen, bevor sie die einzelnen parallel geschalteten Anlagen erreichen. Eine solche Aufteilung eines großen Stroms in mehrere kleinere Ströme wird durch die Verwendung von Rohrleitungen (innerhalb der Verbindungspunkte) mit unterschiedlichem Durchmesser und entsprechend unterschiedlichem Strömungswiderstand für die Teilströme erreicht. Speziell die gezielte Aufteilung eines Stroms in definierte (beispielsweise gleichgroße) Teilströme läßt sich (standardisierte identisch aufgebaute Anlagen vorausgesetzt) mit ebenfalls standardisierten Rohrleitungen mit definiertem Druckverlust (Drosselstelle) erreichen.

Eine wichtige Voraussetzung für den Einsatz solcher Drosselstellen ist die Verfügbarkeit von Anlagen mit identischem oder nahezu identischem fluiddynamischem Verhalten und insbesondere ähnlichem Druckverlust. Das vorliegende System erlaubt den Einsatz solcher Drosselelemente, da zum einen die vorhandenen Rohrleitungen beliebig austauschbar sind gegen solche Drosselstellen und zum anderen Anlagen mit sehr ähnlichem fluiddynamischem Verhalten aufgebaut werden können aufgrund der erfindungsgemäßen Struktur der Gesamtanlage.

Mit der vorliegenden Erfindung wird ein System geschaffen, das zugänglich ist für alle Hersteller von Reaktoren der Mikroverfahrenstechnik.

Unter dem Begriff "Reaktor" sollen hier auch übliche Ausrüstungsteile von Anlagen wie Ventile, Durchflußregler, Sicherheitseinrichtungen wie Überdruckventile, etc. verstanden werden. Unter dem Begriff "Bus" soll sowohl ein fluidischer, elektrischer und auch datenübertragender Bus verstanden werden, da nur die Busstruktur geeignet ist für die gleichzeitige Übertragung sowie Verarbeitung von fluidischen und elektrischen (digitalen) Strömen, im Gegensatz zur Stern- oder Ringstruktur.

Wesentlich ist auch, daß fluidische, elektrische und datenübertragende Busstränge parallel und räumlich benachbart verlaufen können. Somit sind beispielsweise gemessene Daten und Steuersignale über dieselben räumlich eng benachbarten Wege übertragbar. Das führt zu einem sehr übersichtlichen logischen Anlagenaufbau.

In einer weiteren Ausführungsform können daher in dem erfindungsgemäßen Knoten das (die) mittleren Segment(e) Verteilungseinrichtungen für fluidische, elektrische, optische oder Wärmeströme oder von mehreren davon aufweisen, die auch eine Verteilung senkrecht oder im Winkel zur Mittelachse des Knotens ermöglichen.

Weiterhin können insbesondere in einem mittleren Segment Materialströme höhenversetzt in das nächste Segment weitergeleitet werden, beispielsweise durch Schrägführung von Kanälen/Bohrungen oder Rohrleitungen oder durch Langlöcher im Inneren des Segments. Dadurch wird in der reaktorspezifischen Austrittsseite des Knotens die entsprechend erforderliche paßgenaue Anschlußstelle für den Eintritt in den Reaktor erreicht.

In einer weiteren Ausführungsform der Erfindung kann z.B. ein Knoten mit drei Segmenten so gestaltet sein, daß die reaktorspezifischen Seiten sich nicht gegenüberliegen, sondern, bezogen auf die Mittelebene des Knotens, um 90 ° versetzt sind. In einem solchen Falle können die Durchleitungen in jedem der drei Segmente durch T-Stücke oder Winkelstücke (siehe Fig. 5a) in verschiedenen Höhen gebildet werden. Die Durchflußrichtung eines Teilchenstromes wird dann in der Ebenen der Mittelachse des Knotens nicht weitergeführt, sondern in dem mit 90 ° angesetzten Ansatzstück und erreicht somit den im Winkel von 90° angesetzten Reaktor.

In einer weiteren Ausführungsform können das/die mittleren Segment(e) an ihren senkrecht oder im Winkel zur Mittelachse des Knotens angeordneten Außenflächen wenigstens eine weitere standardisierte Seite aufweisen. Dadurch wird es möglich, beispielsweise im Winkel von 90 °, bezogen auf die Mittelachse des Knotens, einen weiteren Knoten oder ein anderes Element eines modularen Systems anzuordnen, das an seiner Außenseite wenigstens eine standardisierte Seite hat. Damit bringt der erfindungsgemäße Knoten ein räumliches Element in die Verteilung von Strömen bzw. die Ankopplung von mikromodularen Elementen ein.

Eine weitere Ausführungsform der Erfindung besteht darin, daß der Verbindungspunkt wenigstens ein Linienelement ist, wobei das Linienelement in einer Richtung durchgehende Fließleitungen hat. In einer besonderen Ausführungsform kann seine Länge ein Vielfaches des Rastermaßes betragen.

In einer weiteren Ausführungsform schließt sich an den Verbindungspunkt, der ein segmentierter Knoten ist, ein weiterer Knoten oder ein Linienelement an, wobei sich dieser weitere Knoten von der Außenfläche des mittleren Segments senkrecht zur Mittelachse des Knotens erstreckt, also in eine neue Raumrichtung. Die freie Anschlußseite des weiteren Knotens oder Linienelements kann eine reaktorspezifische oder eine standardisierte Anschlußseite sein, je nachdem ob ein Reaktorelement angeschlossen wird oder die Reihe von Verbindungspunkten in dieser neuen Raumrichtung weitergeführt wird.

Sowohl Linienelemente als auch Knotensegmente können an der reaktorspezifischen oder der standardisierten Seite oder an beiden Seiten zusätzliche Aussparungen für die Aufnahme platineartiger Bauelemente aufweisen, um separate Bauteile, wie Chips aufzunehmen, und über entsprechende Durchlässe die daraus gewonnenen Informationen bzw. Ströme weiterzuleiten.

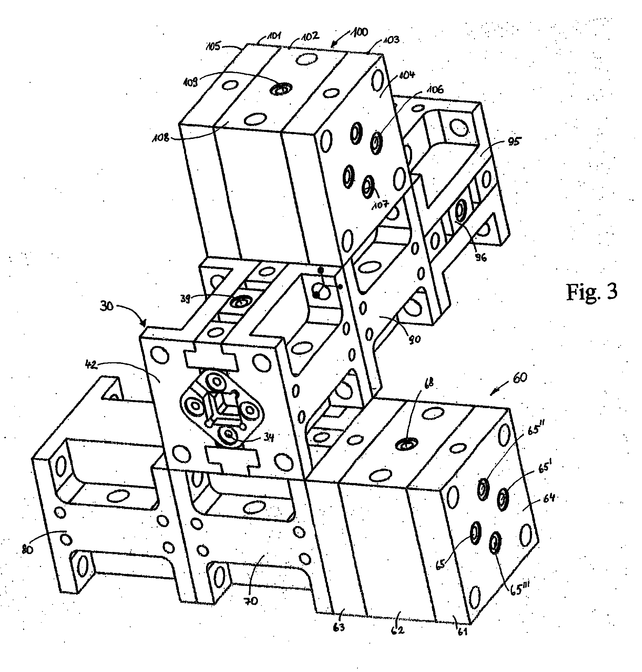

Die Führung von Rohrleitungen oder Kanälen innerhalb eines Verbindungspunktes kann in beliebiger Anordnung erfolgen, z.B. gleichmäßig verteilt, so wie in Fig. 3 gezeigt, oder mehrere auf einer Seite. Dafür kann die entsprechende Anordnung von Eintrittsöffnungen des dem Linienelement folgenden Elements wesentlich sein.

In einer weiteren Ausführungsform der Erfindung kann ein erster Knoten mit einem zweiten Knoten verbunden sein, wobei in dem zweiten Knoten eine reaktorspezifische Seite von dessen erstem oder zweitem Segment durch eine standardisierte Seite ersetzt ist und der zweite Knoten an der standardisierten Seite des ersten Knotens angekoppelt ist, die sich im Winkel von 90° zur Mittelachse des Knotens befindet. Auf diese Weise können beispielsweise drei Mikroreaktoren unterschiedlicher Hersteller mit entsprechend unterschiedlichen Anschlußseiten miteinander verbunden werden und/oder in ein System mit standardisierte Anschlußstellen einbezogen werden.

Da eine Aufgabe des Knotens die Versorgung eines Reaktors mit möglichst vielen Zuführungen ist, kann das dritte (mittlere) Segment in einer Ausführungsform der Erfindung so gestaltet werden, daß alle Durchführungen des Knotens auf einer Seite des Knotens ausgeleitet werden.

Die Segmente der erfindungsgemäßen Knoten können durch verbindende Halterungseinrichtungen, wie Spannelemente, Schrauben und dergleichen zusammengehalten werden, wobei diese Halterungseinrichtungen lösbar sind. Mit den Halterungseinrichtungen sowie entsprechend geformten Dichtungselementen werden die in den einzelnen Segmenten vorhandenen Durchlässe nach außen abdichtend für Fluidströme oder kontaktgebend für andere Ströme im Übergang zum nächsten Segment verbunden.

Als Material der Knotensegmente, das für das Segment insgesamt oder Teile davon gleich oder unterschiedlich sein kann, können beliebige bekannte Materialien eingesetzt werden. Bevorzugte sind aus der Gruppe ausgewählt, bestehend aus Aluminium, Kupfer, Stahl, organischen Polymeren, anorganischen Polymeren, Glas, Keramik und Kompositen davon.

Die Segmente können unterschiedliche Querschnittsformen haben, z.B. rechteckig, quadratisch, kreisförmig mit 3 bis 8 abgeflachten Seiten, fünfeckig, sechseckig usw., vorzugsweise sind sie quadratisch oder rechteckig.

Eine weitere bevorzugte Ausführungsform der Erfindung besteht darin, daß wenigstens ein Segment eines Knotens oder ein Linienelement vollständig oder teilweise aus einem transparenten Material besteht. Dadurch wird es beispielsweise möglich, Infrarotsignale, UV-Signale oder optische Signale (z.B. durch Laser) zu einer entsprechenden Anschlußstelle des nächsten Segments oder auch nach außen zu übertragen. Ein solches Signal wie z.B. ein Laserstrahl kann auch von außen zur Mitte des Materialstromes oder durch das transparente Material hindurch z.B. zu Meßzwecken gerichtet werden.

In einer weiteren Ausführungsform der Erfindung ist wenigstens ein wärmeleitfähiges Segment mit einem Segment aus einem Isoliermaterial gekoppelt. Dadurch können Sektionen, die bei niedriger Temperatur arbeiten, solchen Sektionen eines entsprechenden Systems benachbart werden, die bei hohen Temperaturen betrieben werden.

Die Verteilungseinrichtung in einem bzw. in dem mittleren Segment eines Knotens kann zum Beispiel eine Bohrung sein, wie eine T-förmige oder kreuzförmige, oder sie kann eine Langlochbohrung oder eine dreieckig erweiterte öffnung sein, oder es können mehrere Bohrungen parallel zueinander in einem Segment angeordnet sein. Die Bohrung kann Bohrungsabschnitte mit unterschiedlichem Durchmesser aufweisen.

In einer bevorzugten Ausführungsform ist das mittlere Segment eines Knotens aus Einzelteilen zusammensetzbar und enthält wenigstens zwei Abstandselemente, ein Rohrleitungsstück, wobei das Rohrleitungsstück ausgewählt ist unter T-Stück, rechtwinkliges Stück (Bogen), geradliniges Stück und mehreren davon, und wenigstens ein Halteelement für T-Stück, Winkelstück (Bogen) oder beide. Das oder die Halteelement(e) werden in auf gleicher Höhe angeordneten Nuten auf der Innenseite des mittleren (inneren) Segments gehalten. Das Halteelement ist bevorzugt kammförmig ausgebildet mit Kammöffnungen, die in Form und Durchmesser den Rohrleitungsstücken entsprechen (Fig. 5a).

Die erfindungsgemäß eingesetzten Verbindungpunkte gestatten eine Verknüpfung von mehreren Knoten und Linienelementen sowohl zweidimensional als auch dreidimensional. Insbesondere die dreidimensionale Verknüpfung über entsprechend standardisierte Außenseiten an einem Knotensegment oder über mehrere Knotensegmente übergreifend, wobei deren standardisierte Außenseite(n) zu den standardisierten Außenseiten des/der Linienelement(e) passen, lassen ein Vielzahl von Kombinationsmöglichkeiten sowohl untereinander als auch mit anderen Bestandteilen der Mikromodultechnik zu.

Die Segmentierung der Knoten ermöglicht wiederum unterschiedlichen Materialeinsatz, Zusammenführung oder Aufteilung oder Umlenkung von Material- und/oder Signalströmen sowie eine hohe Variabilität in der Kombination mit anderen Elementen der Mikroreaktionstechnik.

Die Erfindung soll nachstehend durch Beispiele näher erläutert werden. In der dazugehörigen Zeichnung zeigen
Fig. 1a : Anordnung von Verbindungspunkten in allen drei Raumrichtungen ohne angeschlossene Reaktormodule;
Fig. 1b : Draufsicht auf die Anordnung von Fig. 1a
Fig. 2 : Schematische Perspektivansicht von zwei miteinander verbundenen Knoten mit Darstellung von optisch herausgezogenen Varianten einzelner Segmente;
Fig. 3 : Perspektivansicht mehrere Knoten ;
Fig. 4 : Knoten mit Reaktormodul (Mikromischer);
Fig. 5a : Explosionsansicht eines mittleren Segments eines Knotens ohne Außensegmente;
Fig. 5b : Perspektivansicht des zusammengebauten mittleren Segments von Fig. 5a;
Fig. 6a : Schematische Darstellung für ein serielles Schienensystem (Stand der Technik);
Fig. 6b : Schematische Darstellung des Bus-systems der Erfindung mit paralleler Führung (Teilströmen) von Edukten;
Fig. 7 : Schematische Darstellung des Bus-systems der Erfindung mit einsträngiger Edukt- und Signalführung.

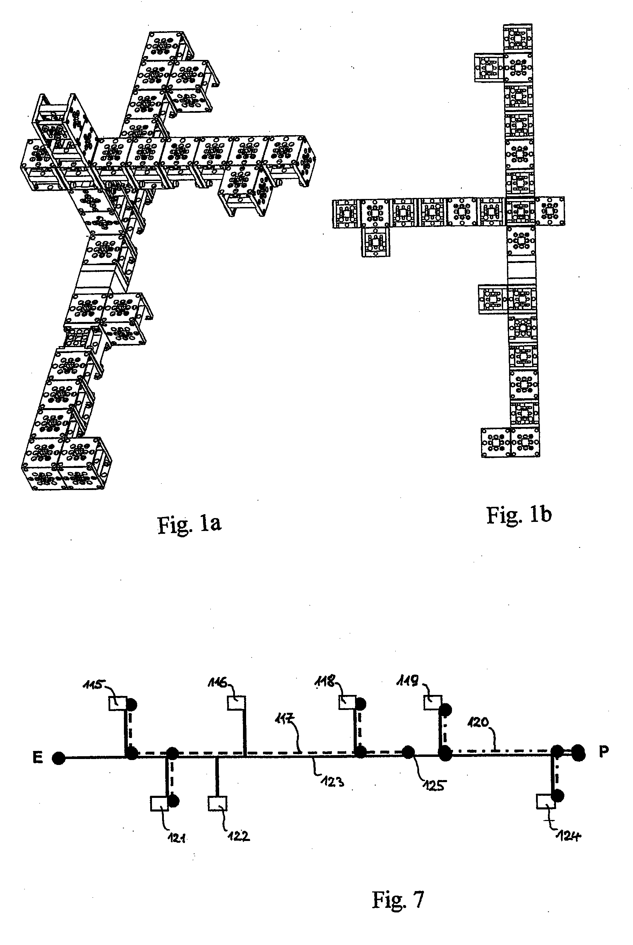

Gemäß Fig. 1a werden unterschiedlich gestaltete Verbindungspunkte in beiden waagerechten Raumrichtungen und senkrecht aneinandergereiht. Aus Gründen der übersichtlichkeit sind jeweils nur die mittleren Segmente von verschiedenen Knoten und Linienelementen dargestellt. An einzelne Knoten dieser Anlage können nunmehr unterschiedliche Reaktormodule (nicht gezeigt) angeschlossen werden. Fig. 1b stellt die spiegelbildliche Draufsicht gemäß Fig. 1a dar.

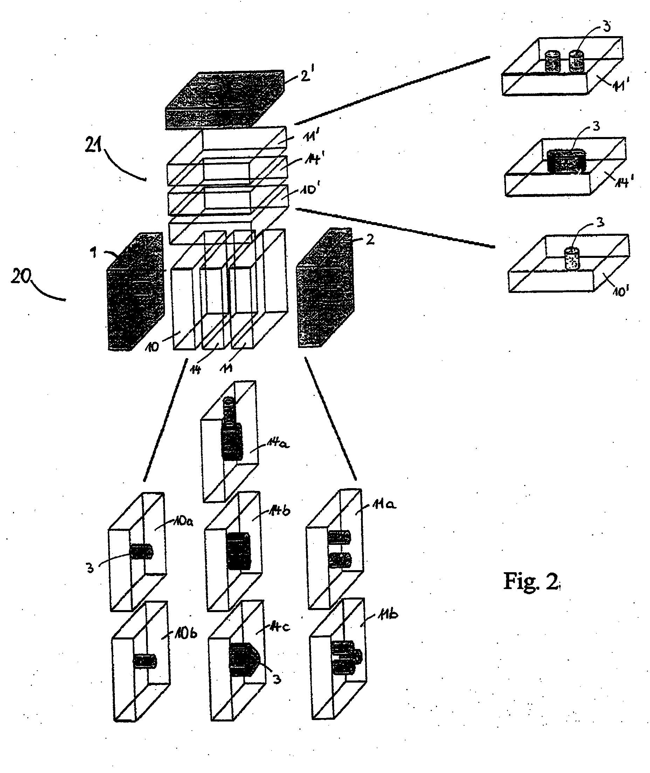

In Fig. 2 wird in schematischer Perspektivansicht ein Knoten 20 mit fünf Segmenten 1;10;14;11;2 dargestellt, an den ein weiterer Knoten 21 mit vier Segmenten 10';14';11';2' angekoppelt ist. Die Ankopplung erfolgt über eine standardisierte Seite des Segments 10', das sich an die senkrecht zur Mittelachse 22 des Knotens befindliche Außenseite 23 des Knotens 14 anschließt und dabei noch die links und rechts daneben liegenden Außenseiten der Segmente 10;11 abdeckt. Die Ankopplung kann an der Außenseite 23 des Segments 14 erfolgen oder zusätzlich auch noch an den links und rechts daneben liegenden Außenseiten der Segmente 10;11, insbesondere dann, wenn diese ebenfalls Verbindungseinrichtungen enthalten.

Für die Segmente 10 bzw. 14 bzw. 11 sind verschiedene Varianten der Durchführungen (Durchlässe) in Form der Segmente 10a, 10b bzw. 14a, 14b, 14c bzw. 11a, 11b dargestellt.

Die Segmente 10', 14' und 11' können beispielsweise die in Fig. 2 auf der rechten Seite gesondert dargestellten Durchführungen 3 enthalten. Die Durchführungen 3 in Fig. 2 sind aus Gründen der Übersichtlichkeit nicht für jedes Segment mit den Bezugszeichen versehen worden.

In den besonderen Fällen der Verbindung zweier Knoten, wie in Fig. 2 dargestellt, kann eine reaktorspezifische Seite eines Knotens wegfallen, wenn die Ankopplung des Knotens, z.B. Knoten 21, an eine zusätzliche standardisierte Seite, wie die Seite 23 des anderen Knotens, z.B. Knoten 20, erfolgt.

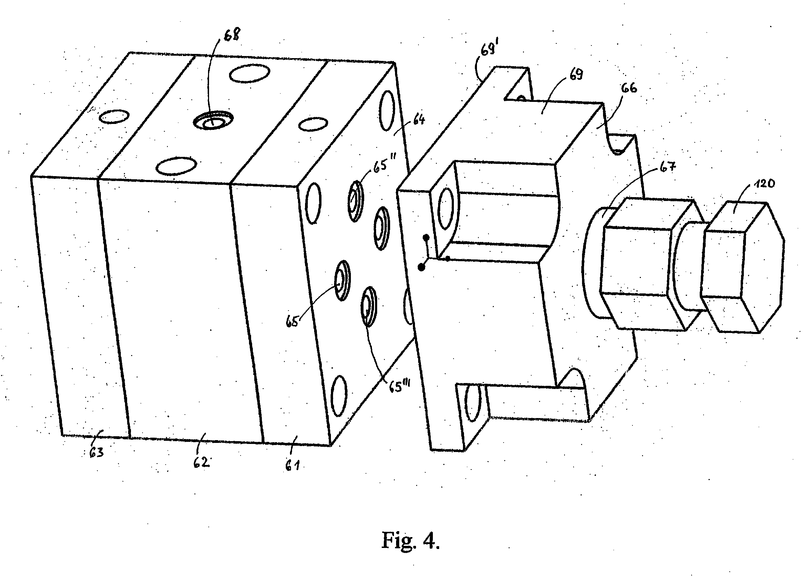

Fig. 3 zeigt in perspektivischer Darstellung die Verbindung mehrerer Knoten. Der Knoten 60, der im Zusammenhang mit Fig. 4 zu sehen ist, ist mit drei Segmenten 61;62;63 an den Knoten 70 angekoppelt.
Fluidische und andere Ströme werden durch die Durchlaßöffnungen 65;65';65";65"' in den Knoten 60 geleitet. Am Auslaß 68 des Segments 62 kann über eine im Inneren des Segments befindliche Verteilungseinrichtung ein Teilstrom abgezogen werden. Die standardisierte Seite 64 des Segments 61 wird an die standardisierte seite 69' des Segments 69 angeschlossen. Gemäß Fig. 4 wird auf der reaktorspezifischen Seite 66 des Segments 69 an ein Gegenstück für formschlüssige Verbindungen 67 ein Mikromischer 120 angeschlossen.

In horizontaler Richtung ist an den Knoten 60 ein Knoten 70 angekoppelt, von dem aus eine Verzweigung im Winkel von 90° vertikal in einen Knoten 30 erfolgt, z.B. in eine Durchführung 34. Horizontal ist ein Linienelement 80 an den Knoten 70 angeschlossen, wobei das Linienelement 80 keine Abzweigungen und ein ungeteiltes Gehäuse hat.

Der Knoten 30 mit der Seite 42 nimmt z.B. über die mit einer Abzweigung versehene Durchführung 34 einen Fluidstrom aus dem Knoten 70 auf.

An den Knoten 30 schließt sich in Horizontalrichtung der Knoten 90 und ein weiterer Knoten 95 an. Über die Verzweigungsstelle 96 des Knotens 95 kann ein Teilstrom entnommen werden.

An den Knoten 90 wird über eine vertikale Verzweigung eine standardisierte Seite eines Knotens 100 angeschlossen. An den Knoten 100 mit den Segmenten 101;102;103 können an der reaktorspezifischen Seite 104;105 zwei Reaktoren angeschlossen werden, in die Teilströme über die Durchlaßöffnungen 106;107 eingeleitet werden. Über die weitere standardisierte Seite 108 des Segments 102 kann ein im Inneren des Segments abgezweigter Teilstrom durch die Durchlaßöffnung 109 abgeleitet werden. Die Explosionsdarstellung von Fig. 5a zeigt die Einzelteile eines mittleren Segments eines Knotens. Die Abstandselemente 101 und Rohrleitungsstücke 102,130,104 sind zusammen mit den Halteelementen 105,106 zwischen den Segmentplatten 107,108 des mittleren Segments angeordnet. Die Halteelemente bilden kammförmige Öffnungen mit unterschiedlicher Form entsprechend dem aufzunehmenden Rohrleitungsstück.

In Fig. 5b sind alle Bestandteile von Fig. 5a zu einer perspektivansicht vereinigt.

Fig. 6a Zeigt die beim Stand der Technik übliche Anordnung von verbindenden Elementen sowie ein Reaktormodul in einer Anlage mit paralleler Anordnung von Modulbausteinen. Infolge der nicht rastergemäßen Größe des Reaktormoduls kommt es bei der Schnittstelle 111 zu einer Verschiebung, so daß eine solche Parallelführung von Eduktströmen und spätere Zusammenführung nicht möglich ist oder nur durch erheblichen zusätzlichen Aufwand.

Fig. 6b zeigt das erfindungsgemäße Bussystem, bei dem die Teilströme B des Eduktes E im Reaktor 110, der sackartig an einen Knoten als Modul angekoppelt ist, bearbeitet und zurück in das Bussystem geleitet wird. An der späteren genau passenden Schnittstelle 111 wird dieser Teilstrom zusammen mit dem anderen Teilstrom C in den Mischer 112 geleitet. Das Endprodukt P wird über einen Knoten an der Schnittstelle 111 am Linienelement 113 entnommen.

Fig. 7 zeigt das Bussystem der Erfindung in schematischer Darstellung. Das Edukt E (bzw. die Edukte, Wärmeträgermedium usw.) wird innerhalb des fluidischen Busses 123 geführt und an einem Knoten zum Wärmeaustauscher 121 geleitet. Nach Rückkehr über den gleichen Knoten in die Hauptströmungsrichtung wird es an einem weiteren Knoten dem Reaktor 122 zugeführt und nach Passieren des Ventils (z.B. Sicherheitsventil) 116 anschließend dem Wärmeaustauscher 118. Danach gelangt das Edukt in den zweiten Reaktor 119 und von dort in den Mischer 124, bvor es als Produkt P entnommen wird.

Gleichzeitig mit dem fluidischen Bus 123 ist der Signalbus 117 vorgesehen, der von dem Prozeßleitsystem 115 die Signale zum Wärmeaustauscher 116 und zum Wärmetauscher 121 führt bzw. von dort empfängt. Informationen über die Produktbeschaffenheit werden zudem an der Meßstelle 125 aufgenommen. Die Begleitheizung 120 sorgt dafür, daß die Produkttemperatur eine gewünschte Grenztemperatur nicht unterschreitet.

## Patentansprüche

1. Modulare Prozeßanlage der Mikroreaktionstechnik mit Verbindungspunkten, **gekennzeichnet durch**
a) wenigstens eine Reihe hintereinander angeordneter modularer Verbindungspunkte, die in ihrem Inneren durchlaßfähig sind für fluidische, elektrische, sensorische und/oder digitale Materialströme und die jeweils in jeder Raumrichtung ein gleiches Rastermaß aufweisen und ein Bussystem bilden, und
b) Reaktormodule, die von der Reihe modularer Verbindungspunkte, die Knoten oder Linienelemente darstellen, an einem Knoten in eine horizontale und/oder vertikale Raumrichtung abzweigen, und mit Materialzuführungen von den Knoten zu den Reaktormodulen und gegebenenfalls Materialabführungen von den Reaktormodulen nur in Richtung der Knoten, und
c) wobei die Knoten segmentiert sind und an wenigstens zwei Außenseiten standardisierte Anschlußseiten aufweisen.

2. Anlage nach Anspruch 1, **dadurch gekennzeichnet, daß** die Verbindungspunkte kubisch sind.

3. Anlage nach Anspruch 1, **dadurch gekennzeichnet, daß**
jeder Knoten aus wenigstens drei aneinandergereihten, mit Durchlässen versehenen Segmenten besteht,
wobei die Segmente nach außen standardisierte oder reaktorspezifische Anschlußseiten und untereinander standardisierte Anschlußseiten haben,
und das mittlere Segment wenigstens eines der Knoten quer zu einer Hauptströmungsrichtung der Materialströme wenigstens eine weitere standardisierte Anschlußseite hat, deren Öffnungen über Verteilungseinrichtungen im Inneren des dritten Segments mit den Materialströmen der Hauptströmungsrichtung verbunden sind.

4. Anlage nach Anspruch 3, **dadurch gekennzeichnet, daß** sich an diese weitere standardisierte Anschlußseite ein weiteres Segment (X) mit einer standardisierten Anschlußseite und einer reaktorspezifischen Anschlußseite angeschlossen ist und wobei an diesen Knoten über dessen mittleres Segment und das weitere Segment (X) ein beliebiges Reaktormodul an der reaktorspezifischen Außenseite angeschlossen ist.

5. Anlage nach Anspruch 3, **dadurch gekennzeichnet, daß**
der Knoten aus wenigstens drei aneinandergereihten, mit Durchlässen versehenen Segmenten besteht, von denen die beiden äußeren ersten und zweiten Segmente auf ihrer nach außen weisenden Seite jeweils eine reaktorspezifische Seite bilden und auf ihrer nach innen weisenden Seite jeweils eine standardisierte Seite bilden, wobei sich die standardisierte innere Seite des ersten und zweiten Segments an eine standardisierte Seite eines dazwischenliegenden dritten Segments anschließt, und wobei das mittlere Segment an seinen quer zur Hauptströmungsrichtung befindlichen Außenflächen wenigstens zwei weitere standardisierte Außenseiten aufweist.

6. Anlage nach Anspruch 1 **dadurch gekennzeichnet, daß** das Linienelement aus drei aneinandergereihten, mit Durchlässen versehenen Segmenten besteht, wobei die Segmente nach den beiden Außenseiten und untereinander standardisierte Anschlußseiten sowie gerade Durchführungen für Materialströme von einem äußeren Segment zum anderen äußeren Segment haben.

7. Anlage nach Anspruch 1, **dadurch gekennzeichnet, daß** das mittlere Segment Austrittsöffnungen in Richtung zu einem angeschlossenen Reaktormodul für elektrische Ströme, optische Ströme, Wärmeströme oder mehrere davon hat, jedoch keine Eintrittsöffnungen für gleichartige rückgeführte Ströme aus dem angeschlossenen Reaktormodul, und das Reaktormodul gleichfalls nur entsprechende Eintrittsöffnungen für diese Ströme aufweist und keine Austrittsöffnungen.

8. Anlage nach Anspruch 1, **dadurch gekennzeichnet, daß** das mittlere Segment Austrittsöffnungen in Richtung zu einem angeschlossenen Reaktormodul für fluidische Ströme, elektrische Ströme, optische Ströme, Wärmeströme oder mehrere davon hat und Eintrittsöffnungen für gleichartige rückgeführte Ströme aus dem angeschlossenen Reaktormodul, und das Reaktormodul gleichfalls entsprechende Ein- und Austrittsöffnungen in Richtung zu dem mittleren Segment aufweist.

9. Anlage nach Anspruch 1, **dadurch gekennzeichnet, daß** die Knoten über ihr mittleres Segment und daran angeschlossene weitere Knoten und/oder Linienelemente Ausführungsformen der Anlage in alle drei Raumrichtungen bilden.

10. Anlage nach Anspruch 1, **dadurch gekennzeichnet, daß** sie aus einer ersten Reihe (50) und einer zweiten Reihe (60) parallel geführter, hintereinander angeordneter modularer Verbindungspunkte besteht, bei denen infolge des Rastermaßes in beiden Reihen gegenüberliegende Knoten (51;61 und 52;62) durch dazwischen eingepaßte Knoten und/oder Linienelemente (55;65) paßgenau über die Anschlußseiten der mittleren Segmente der Knoten (51;61 und 52;62) verbunden sind.

11. Anlage nach Anspruch 1, **dadurch gekennzeichnet, daß** wenigstens ein Segment eines Knotens aus einem transparenten Material besteht.
